Europäisches Patentamt

European Patent Office

Office européen des brevets

(11) Publication number: **0 079 387**
A1

# (12) EUROPEAN PATENT APPLICATION

published in accordance with Art. 158(3) EPC

(21) Application number: 82901438.0

(22) Date of filing: 18.05.82

Data of the international application taken as a basis:

(86) International application number:
PCT/JP82/00175

(87) International publication number:
WO82/04007 (25.11.82 82/28)

(51) Int. Cl.³: **B 25 J 17/02**

(30) Priority: 19.05.81 JP 74103/81

(43) Date of publication of application:
25.05.83 Bulletin 83/21

(84) Designated Contracting States:
DE FR GB

(71) Applicant: Fanuc Ltd
5-1, Asahigaoka, 3-chome
Hino-shi, Tokyo 191(JP)

(72) Inventor: INAGAKI, Shigemi
4-16-3-610, Kyonan-cho Musashino-shi
Tokyo 180(JP)

(74) Representative: Allman, Peter John et al,
Marks and Clerk Scottish Life House Bridge Street
Manchester M3 3DP(GB)

(54) WRIST MECHANISM FOR INDUSTRIAL ROBOT.

(57) Wrist mechanism for an industrial robot in which at least two robot hand mounting surfaces (24, 26) are formed at a wrist (20) for mounting and holding robot hands, positioned between the robot arm and the robot hands, said robot hands being constructed so as to be rotatably positioned around the axis of the shaft of a positioning motor (32) by a gear mechanism (40) mounted in the wrist and coupled to the input shaft of the gear mechanism.

Fig. 2

EP 0 079 387 A1

- 1 -

DESCRIPTION

TITLE OF THE INVENTION

A Wrist Mechanism for an Industrial Robot

TECHNICAL FIELD

The present invention relates to an industrial robot and more particularly to an improved structure of a wrist mechanism which is interposed between a robot hand and a robot arm.

BACKGROUND ART

Recently, industries have an inclination toward the promotion of labor-saving through the automated carrying-in of workpieces and removal, and carrying-out of articles machined after the completion of machining, by installing industrial robots in combination with machinery, automatic machine tools, and for instance, by controlling the robot actions of those industrial robots correspondingly to the mechanical motions such as machining operations. In the case of such industrial robots, a control method is employed, in which robot motions suitable to the mechanical motions of a machine tool, for instance, are taught previously to a robot controller for controlling the robot actions of the industrial robot. In order to attain such robot actions, a structure is provided which is capable of making a robot wrist and a robot hand mounted on the extremity of a robot arm reach to objective positions through turning, horizontally extending, and contracting up-and-down motions of the robot arm. On the other hand, a conventional robot wrist has one single robot hand receiving side, which is formed in a structure of a single degree of freedom allowing the robot hand receiving side to be motor-driven, at the most, about the center axis. That is, the conventional robot wrist has a structure capable of turning the robot hand about the center axis for positioning, through the turning operation of the robot hand receiving side. Accordingly, a method is employed in conventional robots, in which various individual wrists, such as a wrist having a robot hand receiving side formed in a vertical plane and a wrist having a robot hand receiving side formed in a horizontal plane, are prepared beforehand, one wrist, suitable to robot actions to be carried out by a robot hand, is selected from among the wrists and is attached to the extremity of a robot arm and then, the robot hand is mounted on the robot hand receiving side of the wrist attached to the robot arm. However, such a structure that requires preparing various wrists and exchanging one wrist for another according to the purpose, inevitably raises the price of the industrial robot, and the instruction given to the robot controller has to be corrected also every time the wrist is changed, thus requiring troublesome changing techniques.

DISCLOSURE OF THE INVENTION

Accordingly, it is an object of the present invention to improve the structural disadvantages of such a conventional wrist for an industrial robot and to provide a wrist mechanism of an industrial robot, having at least two robot hand receiving sides and formed so as to allow the robot hand receiving sides to be turned about the respective center axes by means of a single driving motor for positioning.

According to the present invention, a wrist mechanism of an industrial robot is provided, having at least two robot hand receiving sides formed in a wrist unit which is interposed between the robot arm and the robot hand of an industrial robot for receiving and holding the robot hand, and also having a structure capable of turning the robot hand receiving sides about the respective center axes for positioning by means of a gear mechanism and a positioning driving motor connected to the gear mechanism, which are internally mounted on the wrist unit. The above-mentioned robot hand receiving sides of the wrist unit are formed in planes crossing each other, and it is generally preferable that those planes be perpendicular to each other.

BRIEF DESCRIPTION OF THE DRAWINGS

Figure 1 is an exploded view in perspective of an embodiment of a wrist mechanism for an industrial robot in accordance with the present invention;

Fig. 2 is a longitudinal sectional view showing the constitution of a gear mechanism provided within the wrist mechanism of Fig. 1;

Fig. 3 is a perspective view showing the wrist mechanism mounted on a robot arm in an orientation different from that of Fig. 1; and

Fig. 4 is a perspective view showing the wrist mechanism shown in Figs. 1 to 3, in the state carrying a robot hand.

BEST MODE OF CARRYING OUT THE INVENTION

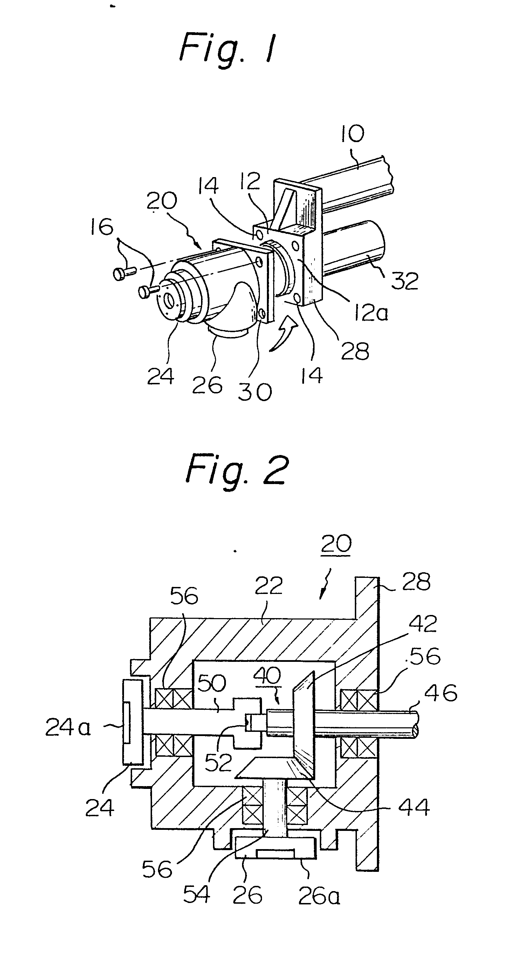

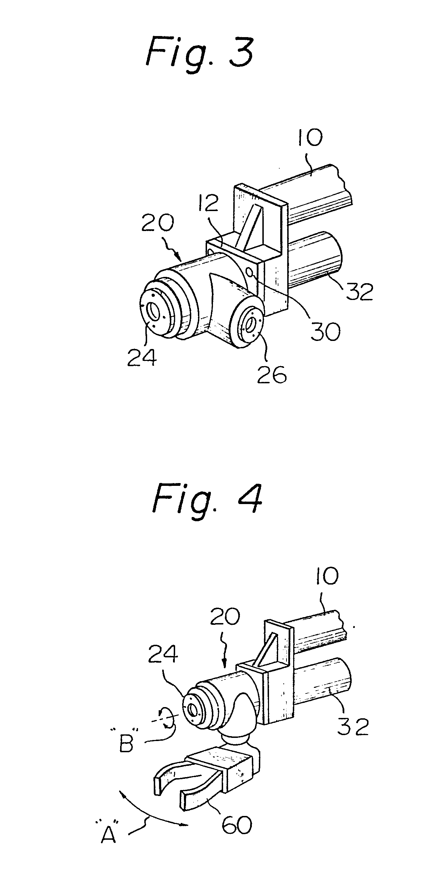

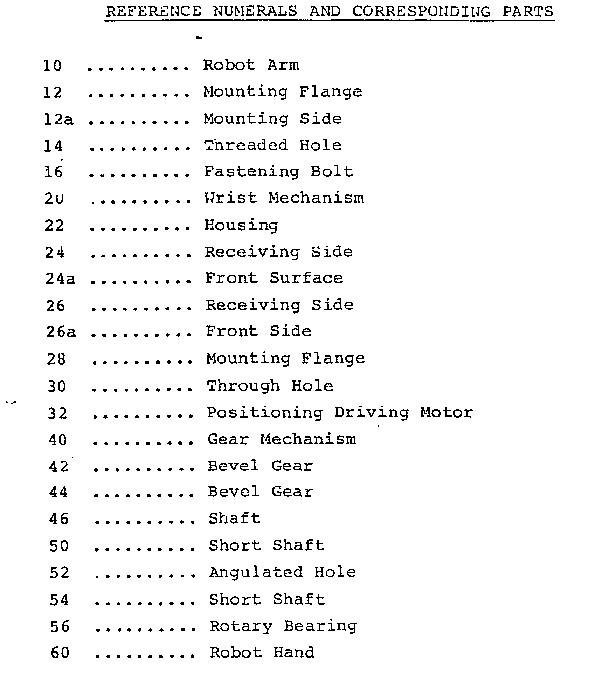

Figure 1 is an exploded view in perspective of a wrist mechanism for an industrial robot in accordance with the present invention, in which two robot hand receiving sides are provided. Figure 2 is an enlarged longitudinal sectional view showing the constitution of a gear mechanism provided within the wrist unit of the embodiment of Fig. 1. Referring to Fig. 1, the wrist mechanism for an industrial robot in accordance with the present invention is formed in a structure to be attached to threaded holes 14 formed in the mounting side 12a of a mounting flange 12 provided at the extremity of a robot arm 10 by means of fastening bolts 16. Now, the wrist mechanism 20 has a housing 22 and two robot hand receiving sides 24 and 26 formed on the outer sides of the housing 22. In the embodiment shown in the drawing, the robot hand receiving side 24 is formed on a vertical plane and horizontally rotates on its axis, while the robot hand receiving side 26 is formed on a horizontal plane and vertically rotates on its axis. A mounting flange 28 is formed on the backside of the housing 22. Holes 30 for receiving the fastening bolts 16 therethrough are formed in the mounting flange 28 at positions corresponding to the threaded holes 14 formed in the mounting side 12a of the mounting flange 12 of the robot arm 10. When the threaded holes 14 of the mounting side 12a and the through holes 30 of the mounting flange 28 are arranged at the vertices of a regular polygon, it is possible to attach the wrist mechanism to the mounting flange 12 of the robot arm 10 in various orientations with respect to the mounting flange 12 by turning the wrist mechanism 20 about the center of the regular polygon. That is, in the position shown in Fig. 1, the wrist mechanism 20 is shown as attached to the mounting flange 12 of the robot arm 10 with the robot hand receiving side 26 oriented downward. However, the wrist mechanism 20 can be attached to the mounting flange 12 of the robot arm 10 in a manner as shown in Fig. 3, in which the robot hand receiving side 26 is arranged similarly to the robot hand receiving side 24 in a vertical plane which rotates horizontally on its axis. A positioning driving motor 32, which will later be described, is attached to the backside of the mounting flange 12 of the robot arm 10 and the output shaft of the positioning driving motor 32 is projected forward from the mounting flange 12 of the robot arm 10 so as to be connected to the input shaft of the gear mechanism, which will be described hereunder, internally provided for the wrist mechanism 20.

Now the description of the gear mechanism internally provided for the wrist mechanism 20 will be provided with reference to Fig. 2. In Figure 2, a gear mechanism 40 is provided within the housing 22 of the wrist mechanism 20. The gear mechanism 40 includes a first bevel gear 42 and a second bevel gear 44. The shaft 46 of the first bevel gear 42 adapted to serve as the input shaft of the gear mechanism 40, is connected to the above-mentioned positioning driving motor 32 (refer to Figs. 1 and 3), by means of a suitable connecting means, and is adapted to turn the first bevel gear 42 at a fixed angle of rotation by the rotatory input from the driving motor 32. The extremity of the shaft 46 of the first bevel gear 42 is formed in an angulated shaft and is fitted in an angulated hole 52 formed in the rear end of a short shaft 50 fixedly connected to the inside end of or integrally formed with the robot hand receiving side 24 for turning the robot hand receiving side 24 by means of the short shaft 50 at a fixed angle of rotation. The first bevel gear 42 is meshed with the second bevel gear 44 so as to turn the robot hand receiving side 26, by means of a short shaft 54 fixed to or integrally formed with the inside end of the other robot hand receiving side 26, at a fixed angle of rotation. In Fig. 2, reference numeral 56 designates rotary bearings for supporting the shaft 46 and the short shafts 52 and 54 therein.

As described hereinbefore, in the wrist mechanism of the present invention, the robot hand receiving sides 24 and 26 can be turned at a fixed angle by the rotary input from the positioning driving motor 32 through the gear mechanism 40. Therefore, when robot hands are attached to the surfaces 24a and 26a of these robot hand receiving sides 24 and 26, respectively, these robot hands can be turned at a fixed angle of rotation about the respective axis of the receiving sides 24 and 26 for positioning. When an encoder of a known type is provided for the above-mentioned positioning driving motor 32, the angle of rotation of the output shaft of the driving motor 32 can be controlled by means of a robot controller in accordance with a feedback control method, whereby the robot hand receiving sides 24 and 26 of the wrist mechanism 20 are turned at a desired angle of rotation for turning and positioning the robot hands attached to the robot hand receiving sides 24 and 26.

It is obvious from what has been described hereinbefore that the wrist mechanism 20 of an industrial robot in accordance with the present invention, which has two robot hand receiving sides 24 and 26, has an advantage as compared with the conventional industrial robot. For example, the conventional industrial robot has a structure requiring selecting a wrist from among various wrists and attaching the selected wrist correspondingly to the required robot actions of the robot hand. On the other hand, the industrial robot of the present invention has one single wrist mechanism (20) which is applicable to various robot actions. Furthermore, although the embodiment shown in Figs. 1 to 3 has a structure having two robot hand receiving sides as described hereinbefore, more than two robot hand receiving sides can be provided and at the same time, these robot hand receiving sides can be adapted to turn and position by means of a single positioning driving motor 32, when the receiving sides which are similar to the robot hand receiving side 26 are arranged additionally around the axis of the first bevel gear 42.

Figure 4 shows the wrist mechanism 20 as attached to the mounting flange 12 of the robot arm 10 with the robot hand receiving side 26 oriented downward and receiving a robot hand 60 on the robot hand receiving side 26. Figure 4 also shows that the robot hand 60 can be turned in the direction of the arrow "A" for positioning by the positioning driving motor 32. Still further, when the robot hand 60 is attached to the robot hand receiving side 24 of the wrist mechanism 20, the robot arm 60 can be turned in the direction of the arrow "B" for positioning by the driving motor 32.

As described hereinbefore, the employment of the wrist mechanism for an industrial robot in accordance with the present invention allows a robot hand to be oriented in various directions for carrying out desired robot actions. Therefore, reduction in the cost of the industrial robot itself can be attained, and at the same time, troublesome work, such as the correction of the contents of instructions to the robot controller necessitated by wrist replacement, can be avoided.

## CLAIMS

1.    A wrist mechanism for an industrial robot interposed between the robot arm and the robot hand of an industrial robot for receiving and holding the robot hand, comprising:

a wrist housing having at least two robot hand receiving sides,

a gear mechanism for transmitting an angle of rotation, provided within said wrist housing and having output shafts directly connected to each of said robot hand receiving sides and one input shaft,

and a positioning driving motor connected to the input shaft of said gear mechanism,

whereby each of said robot hand receiving sides can be turned about the axis thereof and positioned by means of said driving motor.

2.    A wrist mechanism for an industrial robot according to claim 1, wherein said gear mechanism includes a pair of bevel gears meshing with each other and one of said pair of bevel gears having said input shaft.

3.    A wrist mechanism for an industrial robot according to claim 1, wherein the robot mounting sides of said wrist housing form planes crossing each other.

4.    A wrist mechanism for an industrial robot according to claim 2, wherein the bevel gear having said input shaft also has an output shaft which is coaxial with said input shaft and said output shaft is directly connected to one of said robot hand receiving sides.

1

# Fig. 1

# Fig. 2

# Fig. 3

# Fig. 4

## REFERENCE NUMERALS AND CORRESPONDING PARTS

10 .......... Robot Arm

12 .......... Mounting Flange

12a .......... Mounting Side

14 .......... Threaded Hole

16 .......... Fastening Bolt

20 .......... Wrist Mechanism

22 .......... Housing

24 .......... Receiving Side

24a .......... Front Surface

26 .......... Receiving Side

26a .......... Front Side

28 .......... Mounting Flange

30 .......... Through Hole

32 .......... Positioning Driving Motor

40 .......... Gear Mechanism

42 .......... Bevel Gear

44 .......... Bevel Gear

46 .......... Shaft

50 .......... Short Shaft

52 .......... Angulated Hole

54 .......... Short Shaft

56 .......... Rotary Bearing

60 .......... Robot Hand

0079387

# INTERNATIONAL SEARCH REPORT

International Application No **PCT/JP82/00175**

| I. CLASSIFICATION OF SUBJECT MATTER (if several classification symbols apply, indicate all) [3] |
|---|
| According to International Patent Classification (IPC) or to both National Classification and IPC |
| Int. Cl.[3]  B25J  17/02 |

**II. FIELDS SEARCHED**

| Minimum Documentation Searched [4] | |
|---|---|
| Classification System | Classification Symbols |
| IPC | B25J  17/02 |

| | Documentation Searched other than Minimum Documentation to the Extent that such Documents are Included in the Fields Searched [5] |
|---|---|
| | Jitsuyo Shinan Koho        1965 - 1982<br>Kokai Jitsuyo Shinan       1971 - 1982 |

**III. DOCUMENTS CONSIDERED TO BE RELEVANT [14]**

| Category[*] | Citation of Document, [16] with indication, where appropriate, of the relevant passages [17] | Relevant to Claim No. [18] |
|---|---|---|
| X | JP, A, 53-34268 (Nippondenso Co., Ltd.)<br>30 March, 1978 (30.03.78),<br>Column 4, line 1 to column 6, line 3,<br>column 8, line 13 to column 9, line 9 and<br>Figs. 1, 2 | 1-4 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| August 9, 1982  (09.08.82) | August 23, 1982 (23.08.82) |
| International Searching Authority [1] | Signature of Authorized Officer [20] |
| Japanese Patent Office | |